(19) Europäisches Patentamt
European Patent Office
Office européen des brevets

(11) Veröffentlichungsnummer: **0 224 845**
**B1**

(12) # EUROPÄISCHE PATENTSCHRIFT

(45) Veröffentlichungstag der Patentschrift: **20.06.90**

(51) Int. Cl.$^5$: **A 01 N 25/14**

(21) Anmeldenummer: **86116326.9**

(22) Anmeldetag: **25.11.86**

(54) **Neue wasserdispergierbare Granulate.**

(30) Priorität: **30.11.85 DE 3542440**

(43) Veröffentlichungstag der Anmeldung:
**10.06.87 Patentblatt 87/24**

(45) Bekanntmachung des Hinweises auf die Patenterteilung:
**20.06.90 Patentblatt 90/25**

(84) Benannte Vertragsstaaten:
**AT BE CH DE ES FR GB GR IT LI NL**

(56) Entgegenhaltungen:
**DE-A-3 210 869**

(73) Patentinhaber: **HOECHST AKTIENGESELLSCHAFT**
**Postfach 80 03 20**
**D-6230 Frankfurt am Main 80 (DE)**

(72) Erfinder: **Albrecht, Konrad, Dr.**
**Sodener Strasse 64**
**D-6233 Kelkheim (Taunus) (DE)**
Erfinder: **Kocur, Jean, Dr.**
**Am Heiligenstock 1**
**D-6238 Hofheim am Taunus (DE)**
Erfinder: **Röchling, Hans, Dr.**
**Geierfeld 25**
**D-6232 Bad Soden am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 224 845 B1

**Beschreibung**

Gegenstand der vorliegenden Erfindung sind neue in Wasseer dispergierbare Granulate zur Anwendung im Pflanzenschutz, die phosphorylierte Tenside enthalten. Diese besitzen vorteilhafte anwendungstechnische Eigenschaften.

Die in den Handel kommenden Pflanzenschutzmittel werden hauptsächlich in Form von Spritzpulvern, emulgierbaren Konzentraten oder wässrigen Dispersionen angeboten. Zur Herstellung der Spritzbrühen werden die Mittel in Wasser eingerührt.

Der Umgang mit diesen Zubereitungsformen ist nicht unproblematisch. So führen Herstellung und Anwendung von Spritzpulver-Formulierungen häufig zur Belästifung durch Staub. Emulgierbare Konzentrate enthalten Lösungmittel, die leicht entflammbar, hautreizend oder geruchsbelästigend sein können. Dispersionen können bei langen Lagerzeiten schwer aufschütterlbare Sedimente bilden. Außerdem bestehen bei diesen Formulierungen oft Probleme bezüglich der Entsorgung der Verpackungsmaterialien.

Diese Nachteile haben die in Wasser dispergierbaren Granulate (kurz "WG" genannt) nicht, da sie frei fließend, staubarm und gut dosierbar sind. Sie lassen sich problemlos in Polyethylenbehältern, Klotzbodenbeuteln aus Verbundfolie (Papier/Aluminium/Kunstoff) oder Papptrommeln verpacken, die leicht zu entsorgen sind.

Zur technischen Herstellung von dispergierbaren Granulaten stehen zahlreiche Verfahren zur Verfügung (vgl. H. B. Ries "Granuliertechnik und Granuliergeräte" in Aufbereitungstechnik Nr. 3, 1970, S. 147 und M. Rosch und R. Probst in Verfahrenstechnik 9 (1975) S. 59 bis 64). Insbesondere ist die Herstellung von wasserdispergierbaren Granulaten nach dem Wirbelschichtverfahren bekannt, das im Gegenstrom und im Gleichstrom betrieben werden kann.

Die Patentschriften US—A 3920442 und GB—A 1401304 sowie M. Rosch und R. Probst in Verfahrenstechnik *9* (1975) S. 59 beschreiben das Gegenstrom-Verfahren, bei dem im wesentlichen fein vermahlene Wirkstoffpulver, vermischt mit Inertmaterial und Formulierhilfsmitteln durch einen von unten eintretenden Luftstrom verwirbelt und mit einer von oben aufgesprühten Kleberlösung agglomeriert werden. .

Bei dem Gleichstrom-Verfahren wie es in EP—A 0026918, in EP—A 0141436 und EP—A 0141437 sowie bei Verfahrenstechnik *9* (1975), S. 61/62 beschrieben ist, word eine naßvermahlene Wirkstoff-Dispersion im Gleichstrom mit der den Feststoff verwirbelnden Luft in den Producktbehälter der Grandulier-Apparatur eingesprüht.

Die Verwendung einer Wirkstoff-Dispersion als Ausgangsprodukt für ein Granulat ist kostengünstiger als die Verwendung eines Wirkstoffpulvers, da eine Naßvermahlung technisch einfacher durchzuführen ist als eine Trockenvermahlung.

Eine weitere Methode zur Herstellung von wasserdispergierbaren Granulaten ist die Sprühtrocknung wässriger Wirkstoff-Dispersionen, beschrieben in EP—A 0075198 und EP—A 0141509.

Um eine einwandfreie Anwendung zu gewährleisten, müssen wasserdispergierbare Granulate beim Eintragen in Wasser gut benetzt werden, möglichst spontan zerfallen und eine Suspension mit guter Schwebefähigkeit bilden. Bei Granulaten, die nach dem Wirbelschicht-Verfahren oder durch Sprühtrocknung hergestellt werden, wird die Benetzbarkeit und das Aufgehen durch verfahrenstechnische Parameter und durch die verwendeten Formulierungshilfsmittel bestimmt.

So erhält man durch Wirbelschichtgranulierung nach dem besonders günstigen Gleichstromverfahren in hohen Ausbeuten runde, abriebfeste Granulatkörner, die jedock in Wasser nur langsam zerfallen, d. h. nicht spontan dispergieren und einer nur mäßige bis schlechte Schwebefähigkeit aufweisen. Bei der Granulatherstellung durch Sprühtrocknung kann bei der Auswahl von Trocknungsparametern, die für den Herstellungsprozess in bezug auf Wärmeausnutzung, Korngröße und Ausbeute günstig sind, unter Umständen ein Produkt erzeugt werden, das nicht ausreichend schnell benetzt wird.

Es wurde nun überraschenderweise gefunden, daß in beiden Fällen sowohl bei der Granulatherstellung durch Sprühtrocknung und bei der Wirbelschichtgranulierung die anwendunstechnischen Nachteile einer ungenügenden Dispergierbarkeit (schleichte "Spontaneität) und der schlechten Benetzbarkeit durch Verwendung spezieller phosphorylierter Hilfsstoffe abgestellt werden können. Beispiele für solche Hilfsstoffe sind u.a. Phosporsäureestersalze von nichtionogenen Tensiden, wie sie in der DE—A 32 10 869 beschrieben sind.

Gegenstand der vorliegenden Erfindung sind daher neue wasserdispergierbare Granulate zum Einsatz im Pflanzenschutz, dadurch gekennzeichnet, daß sie neben dem Wirkstoff ein Tensid aus der Gruppe der styrylsubstituierten ethoxylierten und phosphorylierten Phenole, der phosphorylierten ethoxylierten oder propoxylierten Fettalkohole, der phosphorylierten Ethylenoxid-Propylenoxid-Blockpolymere oder deren Salz oder ein Gemisch derselben enthalten.

Unter den Salzen sind insbesondere die Alkali- oder Erdalkalisalze sowie die Ammonium, Mono-, Di- oder Trialkylammonium oder Mono-, Di- oder Trialkanolammoniumsalze hervorzuheben.

Als styrylhaltige ethoxylierte Phenole kommen bevorzugt solche mit zwei oder drei Styrolresten infrage, die ca.

18 bis 20 Mol Ethylenoxid enthalten und als Mono- oder Di- Ester der Phosphorsäure vorliegen. Insbesondere können oxethylierte und phosphorylierte Tristyrylphenole, die mit Triethanolamin

neutralisiert wurden, wie ®Soprophor FL (Rhône Poulenc) oder HOE S 3475 (Hoechst AG) eingesetzt werden.

Als phosphorylierte Ethylenoxid-Propylenoxid-Blockpolymere lassen sich insbesondere die Polymeren der nachfolgenden Formeln I bis III erfindungsgemäß verwenden:

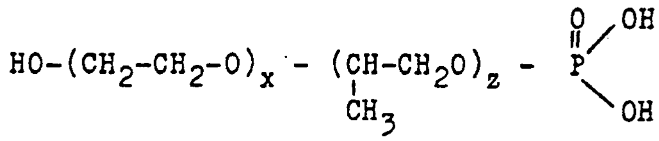

(I)

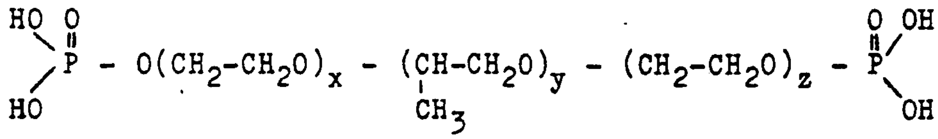

(II)

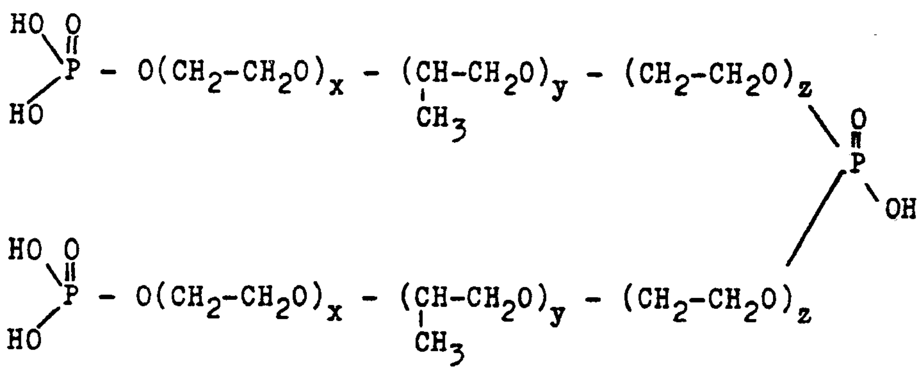

(III)

oder Gemische derselben wobei in diesen Formeln x, y und z unabhängig voneinander eine Zahl von 2 bis 200 bedeuten.

Bevorzugt hiervon sind Bis-Monophosphorsäureester der Formel II, worin x und z annähernd gleiche Werte besitzen.

Die Herstellung der Blockpolymere der Formeln I bis III wird in JA—A 72 47 982 beschrieben. Die erfindungsgemäßen Granulate zeigen gegenüber den bekannten Granulaten überraschenderweise eine verbessete Netz- und Dispergier- Wirkung. So erreichen z.B. Granulate auf der Basis von Phosphorsäuremono- und diester aus Tributylphenoltetraglykolether und Nonylphenol-di- und tetraglykolether nicht die Wirkung der Tenside der erfindungsgemäßen Granulate.

Die bessere Netz- und Dispergierwirkung der erfingungsgemäßen Granulate äußert sich in einer erhöhten Spontaneität, besseren Schwebefähigheit und besseren Benetzbarkeit.

Eine ungenügende Benetzbarkeit wird dadurch sichtbar, daß die Granulatteilchen noch eine Zeit auf der Wasseroberfläche schwimmen, bevor sie dispergieren. Dann können die Teilchen zu größeren Einheiten verkleben. Hieraus resultiert häufig ein unvollständiges Dispergieren des Granulats.

Zusätzlich zu den effindungsgemäß einzusetzenden phosphorylierten Tensiden können die wasserdispergierbaren Granulate noch folgende Zusatzstoffe enthalten:

übliche Dispergiermittel wie das Na-Salz einer Sulfonsäure aus m-Kresol + Formaldehyd + Na-Sulfit (Dispergiermittel 1494®),

Natrium-Oleoylmethyltaurid (®ArkoponT),

Methoxyligninsulfonsaures Natrium (®Vanisperse CB), ligninsulfonsaures Natrium (®Borresperse 3 A)
Natriummethylnaphthalin-Sulfonat (®Supragil MNS 90)

3-Kern-nonylphenolnovolak-18AeO-Sulfobernsteinsäure-halbester-Natrium-Slaz (Dispergiermittel 1728®)

Natriumsalz einer dinaphthylmethan-disulfosäure (®Dispersogen A, ®Tamol NNO), Natriumsalz einer Sulfosaüre aus Kresol + Formaldehyd + Na-Sulfit + Oxynaphthalin-sulfosäure (Dispergiermittel SS®),

Natriumpolycarboxylat (®Sopropon T 36), Kaliumpolycarboxylat (®Dispersant DG), Natriumphenylsulfonat (®Dispersant GH), Natriumalkylnaphthalinsulfonat (® Supragil WP), Natriumnaphthalinsulfonat, kondernsiert (®Supragil NS 90).

Darüber hinaus enthalten die Granulate Inertmaterialien wie $SiO_2$, Kreide, Stärke, Kaolinite, Bindemittel wie Polyvinylpyrrolidon, Saccharid, Polyvinylalkohol, gegebenenfalls Entschäumer wie

Trailkylphosphate oder gegebenenfalls Mittel, die das Aufplatzen der Granulatkörner in Wasser begünstigen wie Pentanatriumtriphosphat.

Als Pflanzenschutzmittel-Wirkstoffe lassen sich in den erfindungsgemäßen Granulaten beispielsweise einsetzen: Fungizide wie Triphenylzinnverbindungen, beispielsweise Fentinhydroxid oder Fentinacetat, Benzimidazolcarbamate wie Carbendazim, Herbizidewie Harnstoffderivate, beispielsweise Linuron, Monolinuron, Isoproturon, Diuron, oder wie substituierte Phenoxypropionsäureester, beispielsweise Fenoxypropethyl, Insektizide wie Dinitrophenolether, beispielsweise Binapacryl, Pyrethroide wie Deltamethrin oder chlorierte bicyclische Verbindungen wie Endosulfan. Diese Pflanzenschutzmittel werden in Ch.R. Worthing, S.B.Walker, The Pesticide Manual, British Crop Protection Council, beschrieben.

Die Wirkstoffgehalte bei den erfindungsgemäßen Granulaten betragen 1 bis 95 Gew.%, insbesondere 40 bis 90 Gew.%.

Der Anteil der phosphorylierten Tenside kann zwischen 0,1% und 30% variieren, insbesondere zwischen 0,2% und 15%.

Formulierungsbeispiele

Allgemeine Angaben

Zur Beurteilung der *Spontaneität* der Granulatformulierung wurde eine Bewertungsskala von 1 bis 4 zugrunde gelegt.

Hierzu wurde 1 g des Granulates in einen mit standartisiertem Wasser (30°C, 342 ppm Wasserhärte) gefüllten 1 l-Meßzylinder gegeben. Nach 1 Minute wurde der Meßzylinder langsam um 180° gedreht und wieder in die Ausgangslage zurückgebracht. Dieser Vorgang wurde dreimal wiederholt.

Skala

1: Alle Granulatkörner sin dispergiert

2: Alle Granulatkoŕrner sind bei Wiederholung der oben beschriebenen Schüttelvorgänge (zweiminütiger Abstand) dispergiert).

3: Es sind nichtdispergierte granulatreste zurückgeblieben.

4: Der überwiegende Teil des Granulats war nicht dispergiert.

*Die Schwebefähigkeit* wurde als diejenige Menge des Präparates (Gew.-%) angegeben, die sich nach Ablauf einer Sedimentationszeit von 30 Minuten in den oberen neun Zehntel Volumenteilen einer Suspension befindet.

*Die Benetzbarkeit* wurde gemäß der Methode bestimmt, wie si im CIPAC-Handbook *Vol. 1* (1970) S. 967 beschrieben ist.

Die in den Beispielen 1 bis 4 beschriebenen Granulate wurden nach dem Wirbelbett-Gleichstrom-Verfahren hergestellt und wurden durch Einsprühen von Wirkstoff-Dispersion in vorgelegtes Granulat erhalten. Es wurde ein Labor-Wirbelbett-Granulierer STREA—1 von Aeromatic AG mit Coating-Einsatz verwendet.

Größere Ansätze wurden mit einem Nauta- oder Glatt-Wirbelbett-Granulator von ca. 20 kg Fassungsvermögen hergestellt. Das als Vorlage verwandte Granulat wurde durch Trockenvermahlung des Wirkstoffes, Vermischen mit Netz- und Dispergiermitteln und Besprühen mit wässriger Kleberlösung im Gegenstrom-Verfahren hergestellt. Die Zusammensetzung des Granulates ist identisch mit der Trockernmasse der eingesprühten Dispersion.

Das als Vorlage benutzte Granulat kann auch durch Sprühtrocknung eines Teils der zu granulierenden Dispersion erhalten werden.

Beispiel 1

80,8 Gew.-% Carbendazim techn. (99 %ig)
11,2 Gew.-% Kaolin
2,0 Gew.-% Netzmittel (siehe Tabelle 1)
3,0 Gew.-% Na-Salz einer Sulfonsäure aus m-Kresol, Formaldehyd und Na-Sulfit (Dispergiermittel SS, Hoechst AG)
1,0 Gew.-% Polyglykol 6000
2,0 Gew.-% Wasser

TABELLE 1

| Netzmittel | Spontaneität | Schwebefähigkeit |
|---|---|---|
| Fettalkohol, ethoxyliert und propoxyliert, anschließend phosphoryliert | 1 | 83% |
| HOE S 3475 | 1—2 | 83% |
| Vergleich: Dibutylnaphthalin-sulfonsaures Natrium | 3—4 | 46% |

Die nach Beispiel 1 hergestellten Granulate haben eine Korngröße von 0,25—2 mm und eine Benetzbarkeit <30 Sek.

Beispiel 2

52,1 Gew.-% Triphenylzinnhydroxid (96 %ig)
2,0 Gew.-% ®Soprophor FL
1,0 Gew.-% Natrium-Oleoylmethyltaurid (®Arkopon-T, Firma Hoechst AG)
6,0 Gew.-% Methoxyligninsulfonsaures Natrium
6,0 Gew.-% Synthetisches gefälltes Siliziumdioxid
13,9 Gew.-% Kaolin
14,0 Gew.-% Glucose
3,0 Gew.-% Polyvinylpyrrolidon
2,0 Gew.-% Wasser

Korngröße: 0,1—2 mm
Benetzbarkeit: <10 Sek
Spontaneität: 1
Schwebefähigkeit: 96%

Beispiel 3

72,9 Gew.-% Triphenylzinnhydroxid (96 %ig)
3,1 Gew.-% Soprophor FL
6,0 Gew.-% Na-Ligninsulfonat
3,0 Gew.-% Polyvinylpyrrolidon
10,0 Gew.-% Synthetisches gefälltes Siliziumdioxid
3,0 Gew.-% Kaolin
2,0 Gew.-% Wasser

Korngröße: 0,2—2 mm
Benetzbarkeit: <10 Sek
Spontaneität: 1
Schwebefähigkeit: 95,2%

Beispiel 4

88,30 Gew.-% Linuron (90,6 %ig)
0,25 Gew.-% Soprophor FL
2,25 Gew.-% Dibutylnaphthalinsulfonsaures Natrium
2,90 Gew.-% Natrium-methylnaphthalin-Sulfonat
5,50 Gew.-% Polyvinylpyrrolidon
0,80 Gew.-% Synthetisches gefälltes Siliziumdioxid

Korngröße: 0,3—2 mm
Benetzbarkeit: <10 Sek
Spontaneität: 1—2
Schwebefähigkeit: 75%

Zu Beispielen 5—7

Die in den Beispielen 5—7 beschriebenen Granulate wurden durch Sprühtrocknung erhalten. Die Herstellung erfolgte in einem Nubilosa-Sprühturm unter Verwendung einer Einstoff-Druckdüse der Fa. Schlick, Modell 118.

Beispiel 5

75,4 Gew.-% Carbendazin techn. (99,5 %ig)
7,9 Gew.-% Kondensationsprodukt aus Naphthalinsulfonsäure und Formaldehyd
2,0 Gew.-% acylgruppenhaltiger Polyvinylalkohol, Verseifungszahl 83 ± 0,8
6,9 Gew.-% Stärke, teilhydrolysiert
3,0 Gew.-% Netzmittels, s. Tabelle 2
3,6 Gew.-% Kreide
0,4 Gew.-% Triisobutylphosphat
0,8 Gew.-% Wasser

TABELLE 2

| Netzmittel | Benetzbarkeit | Spontaneität |
|---|---|---|
| Soprophor FL | 10 Sek. | 1 |
| Forlanit P | 10 Sek. | 1 |
| *Vergleich:* | | |
| Dibutylnaphthalinsulfonsaures Natrium | > 5 Sek. | 3 |

Korngröße: 60 bis 300 µm
Schwebefähigkeit: 75—85%

Beispiel 6

80,8 Gew.-% Carbendazim techn. (99 %ig)
5,4 Gew.-% Kondensationsprodukt aus Naphthalinsulfonsäure und Formaldehyd
2,9 Gew.-% acylgruppenhaltiger Polyvinylalkohol, Verseifungszahl 83 ± 0,8
5,4 Gew.-% Stärke, teilhydrolysiert
3,6 Gew.-% Forlanit P
0,4 Gew.-% Triisobutylphosphat
1,5 Gew.-% Wasser

Korngröße 60 bis 300 µm
Schwebefähigkeit: 84%
Spontaneität: 1
Benetzbarkeit: 10 Sek.

Beispiel 7

75,0 Gew.-% Fentinhydroxid techn.
5,9 Gew.-% 3-Kern-nonylphenolnovolak-18-Aeo-Sulfobern-steinsäurehalbester-Natrium-Salz
4,9 Gew.-% acylgruppenhaltiger Polyvinylalkohol, Verseifungszahl 83 ± 0,8
2,0 Gew.-% Netzmittel, s. Tabelle 3
10,5 Gew.-% Pentanatriumtriphosphat
0,4 Gew.-% Triisobutylphosphat
1,3 Gew.-% Wasser

TABELLE 3

| Netzmittel | Benetzbarkeit | Spontaneität |
|---|---|---|
| Blockpolymer von Typ I mit 40% Ethylenoxid im Endprodukt (kann bis zu 30% Polymer vom Typ III enthalten) | 1 Min. | 1 |
| Blockpolymer von Typ I mit 50% Ethylenoxid im Endprodukt (kann bis zu 30% Polymer vom Typ III enthalten) | 1 Min. 20 Sek. | 1 |
| Blockpolymer von Typ I mit 68% EO im Endprodukt (kann bis zu 30% Polymer vom Typ III enthalten) | 1 Min. | 1 |
| Blockpolymer von Typ II mit 40% EO im Endprodukt (kann bis zu 30% Polymer vom Typ III enthalten) | 1 Min. | 1 |
| Blockpolymer von Typ II mit 50% EO im Endprodukt (kann bis zu 30% Polymer vom Typ III enthalten) | 1 Min. 30 Sek. | 1 |
| Blockpolymer von Typ II mit 68% EO im Endprodukt (kann bis zu 30% Polymer vom Typ III enthalten) | 1 Min. | 1 |

FORTSETZUNG DER TABELLE 3

| Netzmittel | Benetzbarkeit | Spontaneität |
|---|---|---|
| Forlanit P | 1 Min. 30 Sek. | 1 |
| Soprophor FL | 1 Min. | 1 |
| *Vergleich:* Natrium-oleoyl-methyltaurid | > 10 Min. | 2 |

Die Korngröße der Granulate nach Beispiel 7 beträgt 60 bis 300 µm; die Schwebefähigkeit beträgt 75 bis 85%.

**Patentansprüche für die Ventragsstaaten: AT BE CH DE FR GB GR IT LI NL**

1. Wasserdispergierbares Granulat zum Einsatz im Pflanzenschutz, dadurch gekennzeichnet, daß es neben dem Wirkstoff ein Tensid aus der Gruppe der styrylsubstituierten ethoxylierten und phosphorylierten Phenole, der phosphorylierten ethoxylierten oder propoxylierten Fettalkohole oder der phosphorylierten Ethylenoxid-Propylenoxid-Blockpolymere oder deren Salz oder ein Gemisch derselben enthält.

2. Granulat gemäß Anspruch 1, dadurch gekennzeichnet, daß es als phosphoryliertes Ethylenoxid-Propylenoxid-Blockpolymer eine Verbindung der Formeln I, II oder III

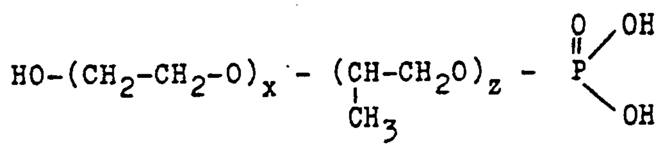

(I)

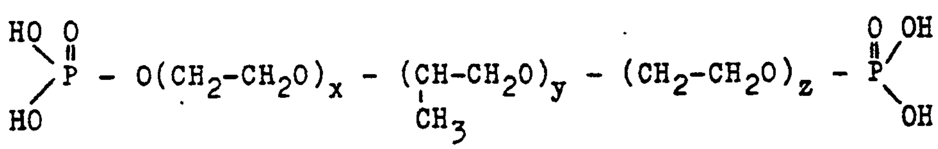

(II)

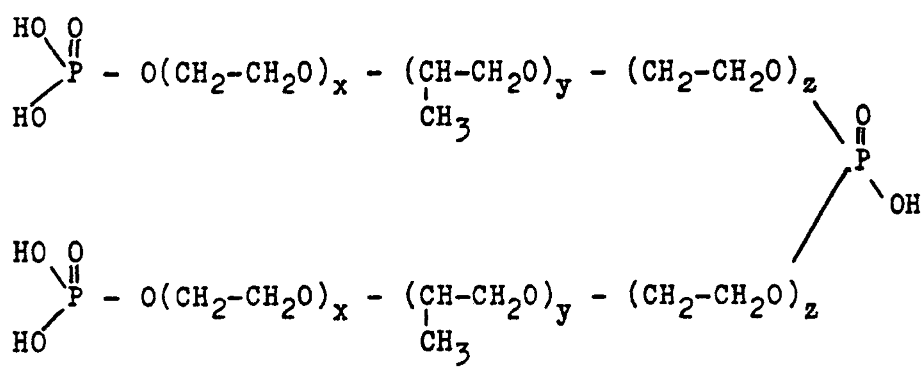

(III)

oder Gemische derselben enthält, wobei jeweils x, y und z unabhängig von einander eine Zahl von 2 bis 200 bedeuten.

3. Granulat gemäß Anspruch 2, dadurch gekennzeichnet, daß es eine Verbindung der Formel II von Anspruch 2 enthalten, worin x und z gleiche Bedeutungen besitzen.

4. Granulat gemäß einem oder mehreren der Ansprüche 1 bis 3, dadurch gekennzeichnet, daß es
0,1 bis 30 Gew.-% eines phosphorylierten Tensids,
1 bis 95 Gew.-% eines Pflanzenschutzmittelwirkstoffes
und übliche Granulierhilfsmittel enthält.

5. Granulat gemäß einem oder mehreren der Ansprüche 1 bis 4, dadurch gekennzeichnet, daß es
0,2 bis 15 Gew.-% eines phosphorylierten Tensids,
40 bis 90 Gew.-% eines Pflanzenschutzmittelwirkstoffes
und übliche Granulierhilfsmittel enthält.

6. Granulat gemäß einem oder mehreren der Ansprüche 1 bis 5, dadurch gekennzeichnet, daß es mindestens einen Wirkstoff aus der Gruppe der Triphenylzinnverbindungen, der Harnstoffderivate, der

substituierten Phenoxypropionsäureester, der Dinitrophenolether, der Pyrethroide, der Benzimidazolcarbamate oder der chlorierten Bicyclen enthält.

7. Granulat gemäß einem oder mehreren der Ansprüche 1 bis 6, dadurch gekennzeichnet, daß es einen Wirkstoff aus der Gruppe Fentinhydroxid, Fentinacetat, Carbendazim, Linuron, Monolinuron, Isoproturon, Diuron, Fenoxapropethyl, Binapacryl, Deltamethrin oder Endosulfan enthält.

8. Verfahren zur Bekämpfung von Schadpflanzen, Schadpilzen oder Schadinsekten in der Landwirtschaft, dadurch gekennzeichnet, daß man auf diese oder die Anbaufläche eine wirksame Menge eines Granulats gemäß Ansprüchen 1 bis 7 appliziert.

**Patentanspruch für den Vertragsstaat: ES**

1. Verfahren zur Bekämpfung von Schadpflanzen, Schadpilzen oder Schadinsekten in der Landwirtschaft, dadurch gekennzeichnet, daß man auf diese oder die Anbaufläche eine wirksame Menge eines wasserdispergierbaren Granulats, des neben dem Wirkstoff ein Tensid aus der Gruppe der styrysubstituierten ethoxylierten und phosphorylierten Phenole, der phosphorylierten ethoxylierten oder propoxylierten Fettalkohole, der phosphorylierten Ethylenoxid-Propylenoxid-Blockpolymere oder deren Salz oder ein Gemisch derselben enthält, appliziert.

2. Verfahren gemäß Anspruch 1, dadurch gekennzeichnet, daß das Granulat als Tensid phosphorylierte Ethylenoxid-Propylenoxid-Blockpolymere eine Verbindung der Formeln

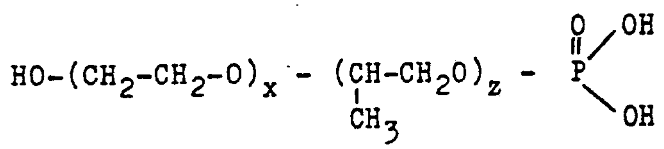 (I)

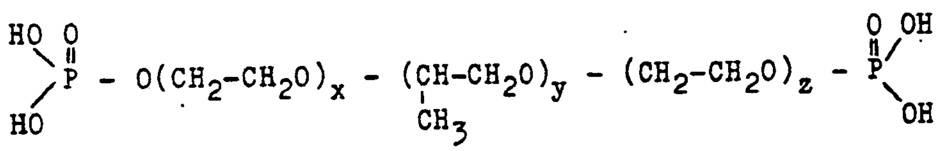 (II)

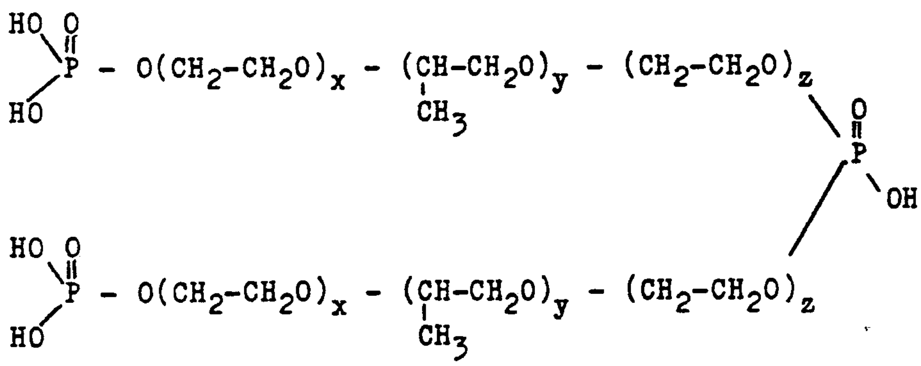 (III)

oder Gemische derselben enthält, wobei jeweils x, y und z unabhängig von einander eine Zahl von 2 bis 200 bedeuten enthält.

3. Verfahren gemäß Anspruch 1 oder 2, dadurch gekennzeichnet, daß das Granulat, eine Verbindung der Formel II von Anspruch 2 enthalten, worin x und z gleiche Bedeutung besitzen.

4. Verfahren gemäß einem oder mehreren der Ansprüche 1 bis 3, dadurch gekennzeichnet, daß das Granulat,

0,1 bis 30 Gew.-% eines phosphorylierten Tensids,
1 bis 95 Gew.-% eines Pflanzenschutzmittelwirkstoffes
und übliche Granulierhilfsmittel enthält.

5. Verfahren gemäß einem oder mehreren der Ansprüche 1 bis 4, dadurch gekennzeichnet, daß das Granulat

0,2 bis 15 Gew.-% eines phosphorylierten Tensids,
40 bis 90 Gew.-% eines Pflanzenschutzmittelwirkstoffes
und übliche Granulierhilfsmittel enthält.

6. Verfahren gemäß einem oder mehreren der Ansprüche 1 bis 5, dadurch gekennzeichnet, daß das Granulat mindestens einen Wirkstoff aus der Gruppe der Triphenylzinnverbindungen, der Harnstoffderivate, der substituierten Phenoxypropionsäureester, der Dinitrophenolether, der Pyrethroide, der Benzimidazolcarbamate oder der chlorierten Bicyclen enthält.

7. Verfahren gemäß einem oder mehreren der Ansprüche 1 bis 6, dadurch gekennzeichnet, daß das Granulat einen Wirkstoff aus der Gruppe Fentinhydroxid, Fentinacetat, Carbendazim, Linuron, Monolinuron, Isoproturon, Diuron, Fenoxapropethyl, Binapacryl, Deltamethrin oder Endosulfan enthält.

**Claims for the Contracting States: AT BE CH DE FR GB IT LI NL GR**

1. Water-dispersible granules for use in plant protection, which, in addition to an active compound, contain a surfactant belonging to the group comprising styryl-substituted ethoxylated and phosphorylated phenols, phosphorylated, ethoxylated or propoxylated fatty alcohols or phosphorylated ethylene oxide/propylene oxide block polymers or a salt thereof, or a mixture of these products.

2. Granules as claimed in claim 1, which contain, as the phosphorylated ethylene oxide/propylene oxide block polymer, a compound of the formulae I, II or III

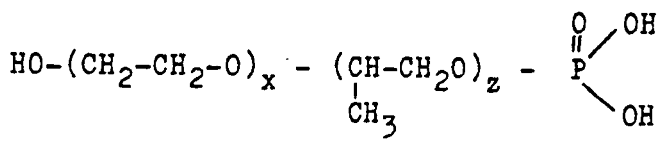
(I)

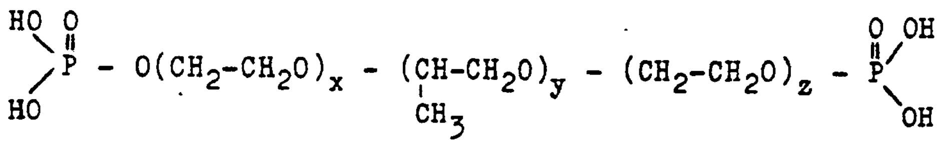
(II)

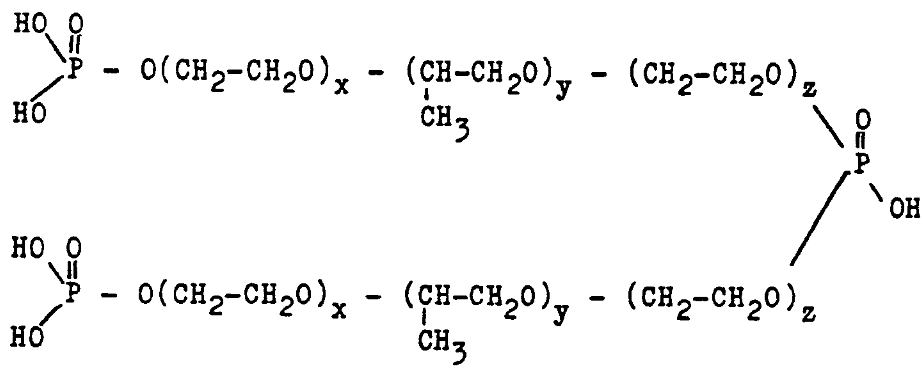
(III)

or mixtures thereof, x, y and z independently of one another each denoting a number from 2 to 200.

3. Granules as claimed in claim 2, which contain a compound of the formula II of claim 2, in which x and z have identical meanings.

4. Granules as claimed in one or more of claims 1 to 3, which contain
0.1 to 30% by weight of a phosphorylated surfactant, 1 to 95% by weight of a plant protection agent active compound and customary granulation auxiliaries.

5. Granules as claimed in one or more of claims 1 to 4, which contain
0.2 to 15% by weight of a phosphorylated surfactant, 40 to 90% by weight of a plant protection agent active compound and customary granulation auxiliaries.

6. Granules as claimed in one or more of claims 1 to 5, which contain at least one active compound belonging to the group comprising triphenyltin compounds, urea derivatives, substituted phenoxypropionic acid esters, dinitrohenol ethers, pyrethroids, benzimidazolecarbamates or chlorinated bicyclic compounds.

7. Granules as claimed in one or more of claims 1 to 6, which contain an active compound belonging to the group comprising fentin hydroxide, fentin acetate, carbendazim, linuron, monolinuron, isoproturon, diuron, fenoxapropethyl, binapacryl, deltamethrin or endosulfan.

8. A process for the control of harmful plants, harmful fungi or harmful insects in agriculture, which comprises applying an effective amount of granules as claimed in claims 1 to 7 to these pests or to the cultivated area.

**Claims for the Contracting State: ES**

1. A process for the control of harmful plants, hamful fungi or harmful insects in agriculture, which comprises applying to these pests or to the cultivated area an effective amount of water-dispersible granules which, in addition to an active compound, contain a surfactant belonging to the group comprising styryl-substituted ethoxylated and phosphorylated phenols, phosphorylated, ethoxylated or propoxylated fatty alcohols or phosphorylated ethylene oxide/propylene oxide block polymers or a salt thereof, or a mixture of these products.

2. The process as claimed in claim 1, wherein the granules contain, as the surfactant phosphorylated ethylene oxide/propylene oxide block polymer, a compound of the formulae

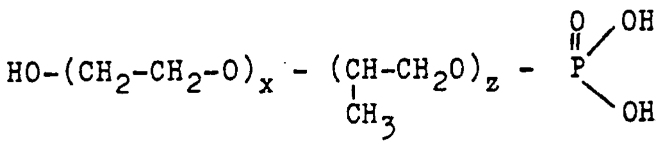 (I)

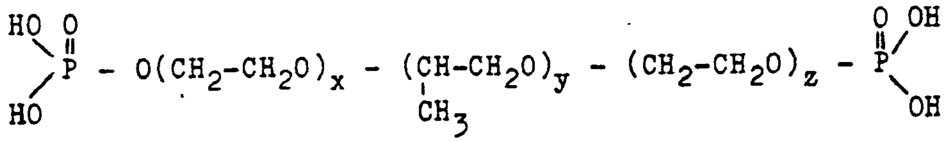 (II)

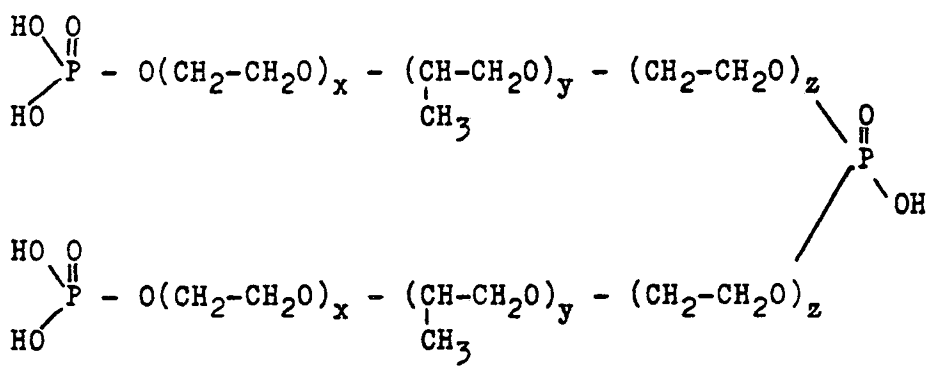 (III)

or mixtures thereof, x, y and z independently of one another each denoting a number from 2 to 200.

3. The process as claimed in claim 1 or 2, wherein the granules contain a compound of the formula II of claim 2, in which x and z have identical meanings.

4. The process as claimed in one or more of claims 1 to 3, wherein the granules contain

0.1 to 30% by weight of a phosphorylated surfactant, 1 to 95% by weight of a plant protection agent active compound and customary granulation auxiliaries.

5. The process as claimed in one or more of claims 1 to 4, wherein the granules contain

0.2 to 15% by weight of a phosphorylated surfactant, 40 to 90% by weight of a plant protection agent active compound and customary granulation auxiliaries.

6. The process as claimed in one or more of claims 1 to 5, wherein the granules contain at least one active compound belonging to the group comprising triphenyltin compounds, urea derivatives, substituted phenoxypropionic acid esters, dinitrohenol ethers, pyrethroids, benzimidazolecarbamates or chlorinated bicyclic compounds.

7. The process as claimed in one or more of claims 1 to 6, wherein the granules contain an active compound belonging to the group comprising fentin hydroxide, fentin acetate, carbendazim, linuron, monolinuron, isoproturon, diuron, fenoxapropethyl, binapacryl, deltamethrin or endosulfan.

**Revendications pour les Etats contractants: BE CH DE FR GB IT LI NL GR AT**

1. Granulés dispersables dans l'eau, destinés à être utilisés dans la protection des plantes, granulés caractérisés en ce qu'ils contiennent, en plus de la matière active, un surfactif pris dans l'ensemble constitué par les phénols éthoxylés et phosphorylés porteurs d'un radical styryle, les alcools gras éthoxylés ou propoxylés qui sont phosphorylés, les polymères séquencés oxyde d'éthylène/oxyde de propylène phosphorylés et leurs sels, ou un mélange de ceux-ci.

2. Granulés selon la réaction 1 caractérisé en ce qu'ils contiennent, comme polymère séquencé oxyde d'éthylène/oxyde de propylène phosphorylé, un composé répondant à l'une des formules I, II et III

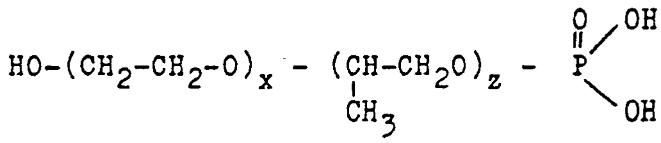

(I)

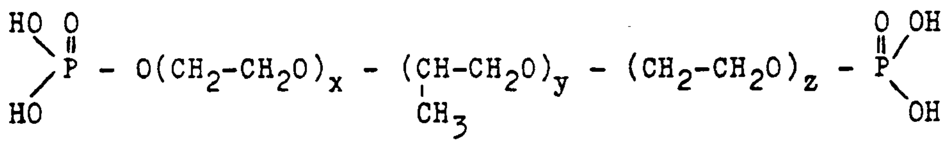

(II)

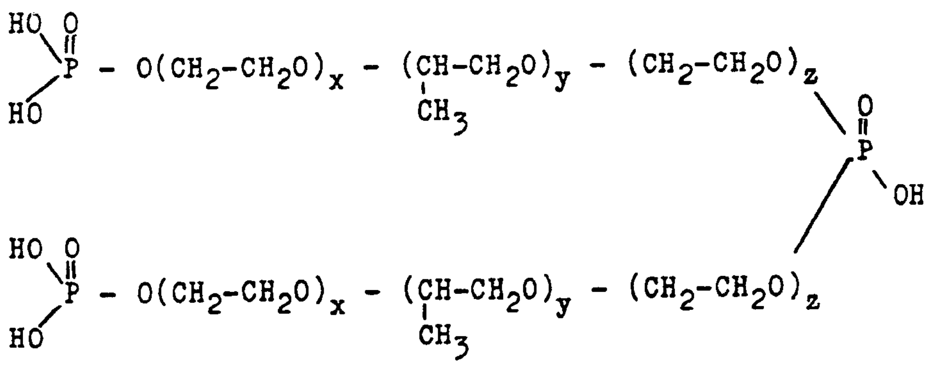

(III)

dans lesquelles x, y et z représentent chacun, indépendamment les un des autres, un nombre de 2 à 200, ou un mélange de ces composés.

3. Granulés selon la revendication 2 caractérisés en ce qu'ils contiennent un composé de formule II selon la revendication 2 dans lequel x et z sont égaux.

4. Granulés selon l'une quelconque des revendications 1 à 3, caractérisés en ce qu'ils contiennent:

de 0,1 à 30% en poids d'un surfactif phosphorylé, de 1 à 95% en poids d'une matière active phytosanitaire et des adjuvants de granulation usuels.

5. Granulés selon l'une quelconque des revendications 1 à 3, caractérisés en ce qu'ils contiennent:

de 0,2 à 15% en poids d'un surfactif phosphorylé, de 40 à 90% en poids d'une matière active phytosanitaire et des adjuvants de granulation usuels.

6. Granulés selon l'une quelconque des revendications 1 à 5, caractérisés en ce qu'ils contiennent au moins une matière active prise dans l'ensemble constitué par les composés triphénylstanniques, les dérivés de l'urée, les esters d'acides phénoxypropioniques substitués, les éthers de dinitrophénols, les pyréthroïdes, les benzimidazole-carbamates et les composés bicycliques chlorés.

7. Granulés selon l'une quelconque des revendications 1 à 6, caractérisés en ce qu'ils contiennent une matière active prise dans l'ensemble constitué par le fentine-hydroxyde, le fentine-acétate, le carbendazime, le linuron, le monolinuron, l'isproturon, le diuron, le fénoxapropéthyle, le binapacryl, la deltaméthrine et l'endosulfan.

8. Procédé pour combattre, en économie agricole, des plantes nuisibles, des mycètes nuisibles ou des insectes nuisibles, procédé caractérisé en ce qu'on applique sur ceux-ci, ou sur la surface de culture, une quantité efficace de granulés selon l'une quelconque des revendications 1 à 7.

**Revendications pour l'Etat contractant: ES**

1. Procédé pour combattre, en économie agricole, des plantes nuisibles, des mycètes nuisibles ou des insectes nuisibles, procédé caractérisé en ce qu'on applique sur ceux-ci, ou sur la surface de culture, une quantité efficace de granulés dispersables dans l'eau, qui contiennent, en plus de la matière active, un surfactif pris dans l'ensemble constitué par les phénols éthoxylés et phosphorylés porteurs d'un radical styryle, les alcools gras éthoxylés ou propoxylés qui sont phosphorylés, les polymères séquencés oxyde d'éthylène/oxyde de propylène phosphorylés et leurs sels, ou un mélange de ceux-ci.

2. Procédé selon la révendication 1 caractérisé en ce que les granules contiennent, comme polymère

séquencé oxyde d'éthylène/oxyde de propylène phosphorylé (surfactif), un composé répondant à l'une des formules

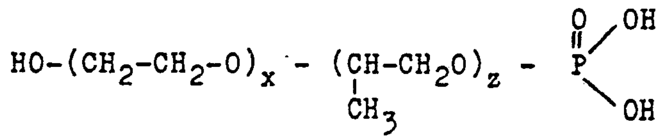

(I)

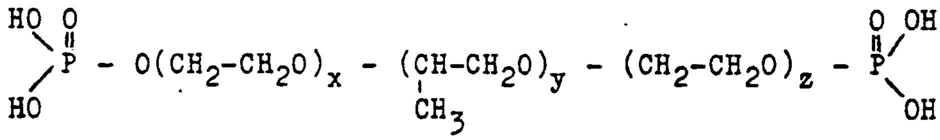

(II)

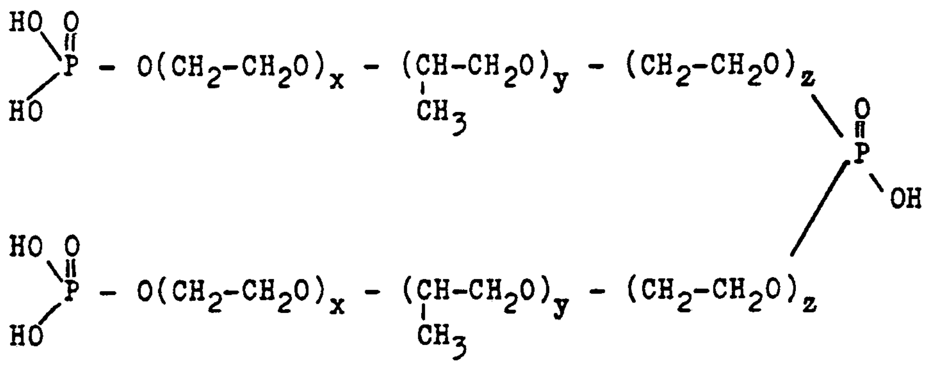

(III)

dans lesquelles x, y et z représentent chacun, indépendamment les uns des autres, un nombre de 2 à 200, ou un mélange de ces composés.

3. Procédé selon l'une des revendications 1 et 2 caractérisés en ce que les granulés contiennent un composé de formule II selon la revendication 2 dans lequel x et z sont égaux.

4. Procédé selon l'une quelconque des revendications 1 à 3, caractérisé en ce que les granulés contiennent:

de 0,1 à 30% en poids d'un surfactif phosphorylé, de 1 à 95% en poids d'une matière active phytosanitaire et des adjuvants de granulation usuels.

5. Procédé selon l'une quelconque des revendications 1 à 3, caractérisé en ce que les granulés contiennent:

de 0,2 à 15% en poids d'un surfactif phosphorylé, de 40 à 90% en poids d'une matière active phytosanitaire et des adjuvants de granulation usuels.

6. Procédé selon l'une quelconque des revendications 1 à 5, caractérisé en ce que les granulés contiennent au moins une matière active prise dans l'ensemble constitué par les composés triphénylstanniques, les dérivés de l'urée, les esters d'acides phénoxypropioniques substitués, les éthers de dinitrophénols, les pyréthroïdes, les benzimidazole-carbamates et les composés bicycliques chlorés.

7. Procédé selon l'une quelconque des revendications 1 à 6, caractérisé en ce que les granulés contiennent une matière active prise dans l'ensemble constitué par le fentine-hydroxyde, le fentine-acétate, le carbendazime, le linuron, le monolinuron, l'isproturon, le diuron, le fénoxapropéthyle, le binapacryl, la deltaméthrine et l'endosulfan.